# EUROPÄISCHE PATENTANMELDUNG

(11) **EP 2 072 374 A2**
(43) Veröffentlichungstag der Anmeldung: **24.06.2009**
(21) Anmeldenummer: 08171491.7
(22) Anmeldetag: 12.12.2008
(51) Int. Cl.: B62D 5/04, B62D 7/14, B62D 7/15

(54) **Vorrichtung und Verfahren zur Dämpfung einer Hinterachslenkung**

(30) Priorität: 18.12.2007 DE 102007055849
(71) Anmelder: ZF-Lenksysteme GmbH, 73527 Schwäbisch Gmünd (DE)
(72) Erfinder: Braun, Andreas, 73116, Wäschenbeuren (DE); Wahl, Gernot, 73529, Schwäbisch Gmünd (DE); Nutsch, Torsten, 73527 Schwäbisch Gmünd (DE); Hägele, Michael, 73432, Aalen (DE); Staudenmaier, Claus, 73072, Donzdorf (DE); Balb, Thomas, 73550, Waldstetten (DE); Liebmann, Corinna, 73525, Schwäbisch Gmünd (DE); Seitz, Timo, 73557 Mutlangen (DE)

(57) **Zusammenfassung**

Für den Fall einer Betriebsstörung in einer Hinterachslenkung ist es wichtig, dass die Lenkung in einen sicheren Zustand geführt wird. Eine Möglichkeit den sicheren Zustand zu erzeugen besteht in der bedämpften Freischaltung der Achse. Denn eine ungedämpfte Freischaltung der Hinterachslenkung könnte insbesondere während einer Kurvenfahrt dazu führen, dass sich der Kurvenradius plötzlich verringern würde, was wiederum die Gefahr für ein Umkippen des Fahrzeuges erhöhen würde. Um hier zumindest für eine elektro-motorisch angetriebene Hinterachslenkung (RAS) Abhilfe zu schaffen, wird eine Vorrichtung (DV) vorgeschlagen, die eine Schaltung (RL, BWN, ECU) aufweist, mittels der für den Fall einer Betriebsstörung der Hinterachslenkung (RAS) der Elektromotor (EM) in einen Generatorbetrieb versetzbar ist, so dass der Elektromotor (EM) ein die Lenkmechanik (LM) dämpfendes Bremsmoment erzeugt. Vorzugsweise weist die Beschaltung des Motors (EM) ein Relais (RL) auf, das im Fehlerfall den Motor (EM) von der Spannungsversorgung trennt und mit einem aus ohmschen Widerständen gebildeten elektrischen bzw. elektronischen Netzwerk (BWN) verbindet.

## Beschreibung

Die Erfindung betrifft eine Vorrichtung zur Dämpfung einer Hinterachslenkung gemäß dem Oberbegriff des Anspruchs 1. Außerdem betrifft die Erfindung eine damit ausgestattete Hinterachslenkung sowie ein damit betriebenes Verfahren zur Dämpfung der Hinterachslenkung gemäß dem Oberbegriff des entsprechenden nebengeordneten Anspruchs.

Hinterachslenkungen werden insbesondere im NKW-Bereich, d.h. in Nutzkraftfahrzeugen, eingesetzt und wirken oft mit der Vorderachslenkung in Form einer Mehrfachlenkung zusammen, um u.a. die Manövrierfähigkeit des Fahrzeugs zu erhöhen. Der Aufbau und die Betriebsfunktion von Hinterachslenkungen ist bereits im Stand der Technik umfassend beschrieben, so auch in zahlreichen früheren Anmeldungen der Anmelderin, wie z.B. in der DE 10326384 A1.

Bei der Konzeption von Hinterachslenkungen ist es wichtig, dass für den Fall einer Betriebsstörung, insbesondere eines System-Ausfalls, die Hinterachslenkung in einen sicheren Zustand geführt wird. Eine bekannte Möglichkeit ist es, die Hinterachse über einen Zentrierzylinder in Geradeausstellung zu halten. Üblicherweise wird dazu die Hinterachslenkung abgeschaltet oder blockiert. Dies geschieht z.B. durch mechanische, pneumatische, hydraulische oder sonstige Blockiervorrichtungen. Die Anmelderin selbst hat in der DE 10351482 A1 hierzu bereits eine vorteilhafte Lösung vorgeschlagen.

Bei einer anderen bekannten Lösung wird die gelenkte Hinterachse freigeschaltet, damit die Hinterräder aufgrund der Adhäsion zur Fahrbahn und dem Nachlauf der Achse dem Kurvenradius des Fahrzeuges folgen können. Jedoch sollte hierbei die Lenkgeschwindigkeit der Hinterachse nicht zu groß sein. Auch sollte ein sicherer Übergang vom Normalbetrieb in den freigeschalteten Zustand ermöglicht werden. Denn ein kritischer Fall könnte z.B. dann eintreten, wenn die Hinterachslenkung im zentrierten Zustand bei einer hohen Fahrgeschwindigkeit in einer Kurve ausfallen würde. Würde die Hinterachse in diesem Fall ohne Dämpfung freigeschaltet werden, so würde sie sogleich einlenken und es würde sich somit der Kurvenradius plötzlich verringern, was wiederum die Gefahr für ein Umkippen des Fahrzeuges erhöhen würde. Abhilfe schafft hier eine Dämpfung der Lenkbewegung, die bewirkt, dass sich der Lenkwinkel der Hinterachse nur langsam ändert und der Fahrer somit Zeit gewinnt, sich auf die veränderte Fahrsituation einzustellen. Eine solche Dämpfung, welche die Lenkbewegung kontrolliert hemmt, könnte relativ leicht bei hydraulischen Hinterachslenkungen durch den Einsatz von Dämpferventilen realisiert werden, über welche dann ein durch die Lenkbewegung erzeugter Hydraulikdruck abfallen würde. Die Anmelderin hat bereits in der EP 1172279 A2 ein Lenkungssystem mit hydraulischen Dämpfern vorgeschlagen.

Für elektro-motorisch betriebene Hinterachslenkungen, kann eine solche Lösung allerdings nicht verwendet werden. Aber auch hier wäre eine effektive Lösung wünschenswert, die zudem noch kostengünstig realisierbar sein sollte.

Daher liegt der vorliegenden Erfindung die Aufgabe zugrunde, eine Vorrichtung zur Dämpfung einer Hinterachslenkung vorzuschlagen, die mittels eines Elektromotors betrieben wird.

Gelöst wird die Aufgabe durch eine Vorrichtung mit den Merkmalen des Anspruchs 1. Außerdem soll ein Verfahren zur Dämpfung einer Hinterachslenkung sowie eine danach arbeitende Hinterachslenkung vorgeschlagen werden.

Demnach wird eine Vorrichtung zur Dämpfung einer Hinterachslenkung vorgeschlagen, bei der ein Elektromotor auf eine Lenkmechanik für die Hinterräder einwirkt, wobei die Vorrichtung eine Schaltung aufweist, mittels der für den Fall einer Betriebsstörung der Hinterachslenkung der Elektromotor in einen Generatorbetrieb versetzbar ist, so dass der Elektromotor ein die Lenkmechanik dämpfendes Bremsmoment erzeugt. Somit wird der Elektromotor im Störungsfall durch eine einfach zu realisierende Beschaltung in den Generatorbetrieb versetzt, wobei durch die elektrisch realisierte Last des Motors ein Bremsmoment erzeugt wird, das dämpfend auf die Bewegung der Hinterachslenkung wirkt. Die Beschaltung des Elektromotors entspricht beispielsweise einem elektrischen bzw. elektronischen Netzwerk, das vorzugsweise kontrolliert erzeugte Kurzschlüsse oder Widerstände aufweist, die mit der Motorwicklung oder einem Wechselrichter verbunden werden, um einen selbstinduzierten Bremsstrom bzw. kontrollierten Kurzschlussstrom zu erzeugen.

Vorgeschlagen wird auch eine Hinterachslenkung mit einer solchen Vorrichtung, die zur Dämpfung der Hinterachslenkung eine entsprechende Schaltung aufweist, mittels der für den Fall einer Betriebsstörung der Hinterachslenkung der Elektromotor in einen Generatorbetrieb versetzbar ist, so dass der Elektromotor ein die Lenkmechanik dämpfendes Bremsmoment erzeugt. Auch wird ein dazu passendes Verfahren zur Dämpfung einer Hinterachslenkung vorgeschlagen, bei dem für den Fall einer Betriebsstörung der Hinterachslenkung der Elektromotor in einen Generatorbetrieb versetzt wird, so dass von dem Elektromotor ein die Lenkmechanik dämpfendes Bremsmoment erzeugt wird.

Die Erfindung ist insbesondere bei permanent erregten Synchronmotoren einsetzbar, indem diese im Störungsfall mit einem Widerstandsnetzwerk beschaltet werden oder z.B. in der Ansteuerschaltung, insbesondere im Zwischenkreis des Wechsel-richters, kurzgeschlossen werden.

Diese und weitere vorteilhafte Ausgestaltungen der Erfindung ergeben sich auch aus den Unteransprüchen.

Demnach ist es vorteilhaft, wenn die Schaltung ein elektrisches Netzwerk, insbesondere ein Widerstandsnetzwerk, aufweist, und ein Schaltmittel, insbesondere ein Relais, aufweist, das den Elektromotor im sicheren Zustand mit dem elektrischen Netzwerk verbindet, um den Elektromotor vom Motorbetrieb in den Bremsbetrieb umzuschalten. In diesem Zusammenhang ist es von Vorteil, wenn die Schaltung eine Steuerung aufweist, die ein Umschalten des Elektromotors vom Motorbetrieb in den Bremsbetrieb steuert.

Alternativ ist es vorteilhaft, den sicheren Zustand durch kontrolliert erzeugte Kurzschlüsse, insbesondere über Transistoren oder über Relais insbesondere an den Motorphasen bzw. -wicklungen oder im Wechselrichter zu erzeugen.

Vorzugsweise ist das elektrische Netzwerk in einem fehlerfreien Betrieb der Hinterachslenkung inaktiv geschaltet.

Weiterhin ist es von Vorteil, wenn das von dem Elektromotor erzeugte Bremsmoment über das elektrische Netzwerk einstellbar ist. In diesem Zusammenhang ist es zudem vorteilhaft, wenn die Steuerung ein Zusammenwirken des elektrischen Netzwerkes mit dem Elektromotor in Abhängigkeit von der Lenkgeschwindigkeit steuert.

Nachfolgend wird ein Ausführungsbeispiel der Erfindung näher anhand der beiliegenden Zeichnungen beschrieben, die jeweils eine schematische Darstellung des Aufbaus eines Ausführungsbeispiels einer erfindungsgemäß ausgestalteten Hinterachslenkung wiedergeben.

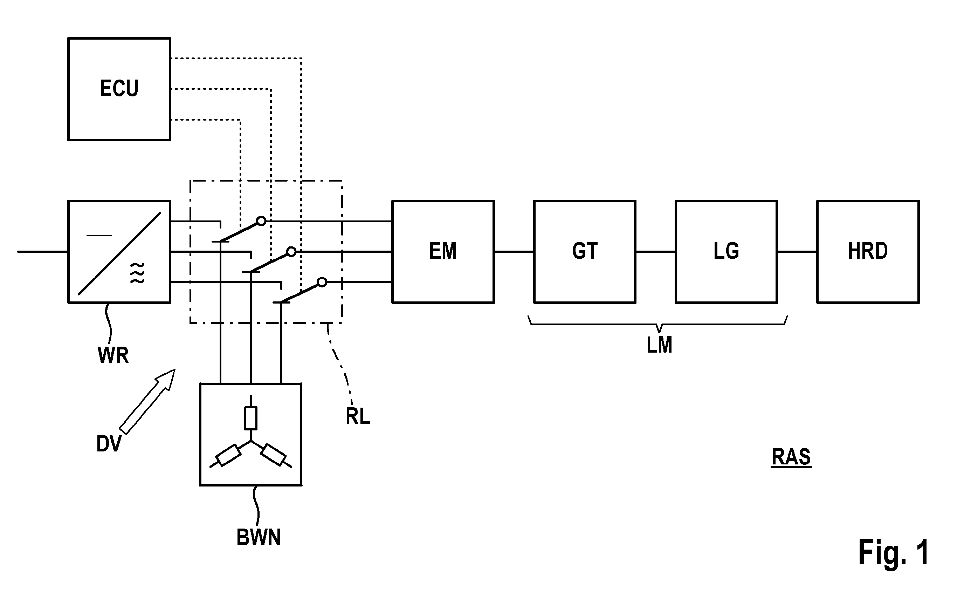

Die Fig. 1 zeigt als Blockschaltbild den Aufbau einer erfindungsgemäßen Hinterachslenkung RAS, bei der die Hinterräder HRD über die Lenkmechanik LM von einem Elektromotor EM ausgelenkt werden. Die Lenkmechanik besteht im Wesentlichen aus einem mit dem Elektromotor EM verbundenen Getriebe GT, das das erzeugte Motormoment auf ein Lenkgestänge LG umsetzt, welches die Hinterräder HRD auslenkt. Die dargestellte Lenkung ist also nach dem Prinzip einer elektrisch angetriebenen Hinterachslenkung aufgebaut.

Der Elektromotor ist hier als permanent erregter Synchronmotor EM ausgebildet, der über einen Wechselrichter WR mit einer dreiphasigen Versorgungsspannung in Form einer steuerbaren Drehstromversorgung gespeist wird. Die Motorsteuerung erfolgt mittels einer elektronischen SteuerungsEinheit ECU in Abhängigkeit von der (nicht dargestellten) Vorderradlenkung.

Erfindungsgemäß ist der Elektromotor EM mit einer Schaltung bzw. Vorrichtung DV ausgestattet, die zur Herstellung eines sicheren Zustandes den Motor aus dem Motorbetrieb in einen Bremsbetrieb umschaltet bzw. dahin überführt. Als sicherer Zustand wird hier insbesondere die bedämpfte Freischaltung der Hinterachse angesehen, welche z.B. bei einer Betriebsstörung der Lenkung erforderlich sein kann. Der sichere Zustand bzw. die Freischaltung kann aber auch ohne Störung erwünscht sein und wird z.B. im ausgeschalteten Zustand der Lenkung hergestellt. Das Umschalten zwischen Bremsbetrieb und Motorbetrieb kann im störungsfreien Fall durch die Steuerung ECU bewirkt werden. Dazu verfügt die Schaltung über ein Relais RL, das den Motor EM mit einem, vorzugsweise rein passivem, Netzwerk BWN verbindet. Das Netzwerk BWN besteht im Wesentlichen aus drei ohmschen Widerständen, die ein Bremswiderstandsnetzwerk bilden. Das dargestellte Netzwerk wird deshalb hier auch als Bremswiderstandsnetzwerk BWN bezeichnet. Die damit im Synchronmotor EM erzeugte und die ganze Lenkung RAS dämpfende Bremswirkung stellt sich wie folgt ein:

Die Widerstände des Netzwerkes BWN sind im sicheren Zustand über das Relais RL an die Motorwicklungen angeschlossen, wobei die Versorgung des Motors EM abgeschaltet ist. Wird nun eine Lenkbewegung der Hinterräder bzw. -achse durch die dort auftretenden Radkräfte erzeugt, so wird der Motor EM über die Lenkmechanik LM mitgedreht. Dadurch wird eine Spannung in den Motorwicklungen induziert, die wiederum einen Stromfluss durch das angeschlossene Bremswiderstandsnetzwerk BWN verursacht. Der Stromfluss erzeugt schließlich im Motor EM ein Gegenmoment, das der Lenkbewegung entgegensteht und diese somit dämpft. Der Motor arbeitet also in einem elektrisch gebremsten Generatorbetrieb, bei dem die Generatorspannungen über das Netzwerk kurzgeschlossen bzw. mit einem definierten im Wesentlichen ohmschen Widerstand beaufschlagt werden. Insbesondere die Dimensionierung des Widerstandnetzwerkes BWN und die Art der Verschaltung mit den Motorphasen bestimmt dabei die Stärke des Kurzschluss- bzw. Generatorstroms und somit die Bremswirkung und Stärke der Dämpfung. Als Sonderfall können die Widerstände auch durch direkte Kurzschlüsse ersetzt werden.

Für den Motorbetrieb kann das Netzwerk BWM durch die Steuerung ECU wieder ausgeschaltet bzw. vom Motor getrennt werden, so dass im Normalbetrieb keine Verluste durch die Widerstandsbeschaltung entstehen.

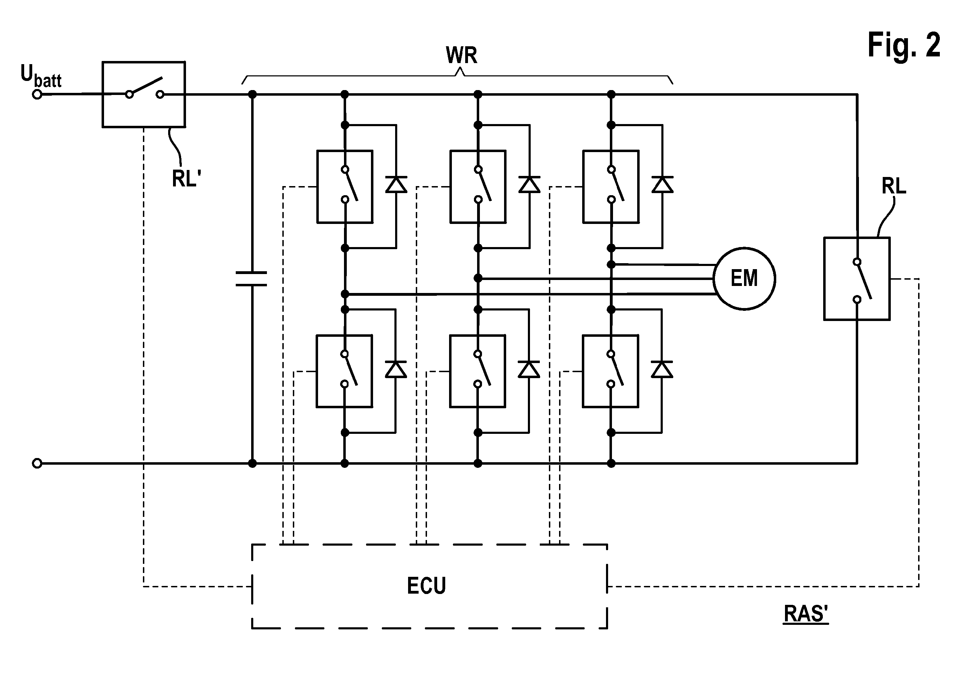

Die Fig. 2 zeigt als zweites Ausführungsbeispiel das Blockschaltbild für den Aufbau einer weiteren erfindungsgemäßen Hinterachslenkung RAS'.

Hier wird die Bremswirkung durch einen Eingriff in den Wechselrichter WR erreicht. Dazu verfügt die Schaltung über zwei Schaltmittel RL und RL', die als Relais ausgebildet sind, wobei das eine Relais RL' den Wechselrichter WR von der Batteriespannung Ubatt trennt und das andere Relais RL die Zwischenkreisspannung des Wechselrichters WR kurzschließt. Beide Relais RL und RL' können von der Steuerung ECU geschaltet werden, die auch den Wechselrichter WR selbst bzw. seine Leistungshalbleiter ansteuert. Die in der Fig. 2 gezeigte Schaltung bzw. Lenkung RAS' kommt ohne Netzwerk aus (vergl. Fig. 1).

In beiden Fällen kann der gezeigte Motor EM eine selbsterregte Synchronmaschine sein, deren drei Statorwicklungen im sicheren Zustand von der Versorgungsspannung getrennt werden und entweder mit dem Widerstandsnetzwerk BWN verbunden werden (s. Fig. 1) oder über den Zwischenkreis des Wechselrichters einen Kurzschluss erfahren (s. Fig. 2). Die Brems- bzw. Dämpfungswirkung tritt in beiden Fällen dann sofort ein.

Die in Fig. 1 gezeigten Widerstände können anstelle von festen ohmschen Widerstandswerten auch veränderbare Widerstandswerte aufweisen, indem z.B. als variable Widerstände wirkende Feldeffekt-Transistoren (FET) verwendet werden. Damit kann eine einstellbare Dämpfung erreicht werden.

Was die anhand der Fig. 2 gezeigte Kurzschluss-Variante betrifft, so verfügt der Wechselrichter neben den einzelnen Relais bzw. Schaltern noch über Freilaufdioden. Insgesamt kann damit das von dem Elektromotor (EM) erzeugte Bremsmoment darüber eingestellt werden, an welcher Stelle der Kurzschluss bzw. die Kurzschlüsse im Wechselrichter (WR) und/oder im Elektromotor (EM) erzeugt wird bzw. werden.

Die hier vorgestellte Dämpfungs-Vorrichtung DV ist rein elektrisch bzw. elektronisch realisierbar und stellt im Vergleich zu dem bekannten hydraulischen System somit ein "trockenes System" dar, das sich durch einen sauberen und wartungsarmen Betrieb auszeichnet. Zur Realisierung ist nur ein geringer Aufwand erforderlich, der im Wesentlichen in der zusätzlichen Beschaltung des ohnehin schon vorhandenen Elektromotors EM liegt. Die Lösung ist also kostengünstig. Die sich einstellende Dämpfung ist jederzeit durch die Steuerung ECU einschaltbar. Im Fehlerfall der ECU muss ein anderes System, wie z.B. eine Watchdog-Schaltung bzw. - Steuerung die Dämpfung einschalten. In diesem Fall darf die ECU sie nicht mehr ausschalten können. Sie kann für den Normalbetrieb ganz abgeschaltet werden, so dass keinerlei Verlusteffekte auftreten. Die Stärke der Dämpfung lässt sich über das zugeschaltete Netzwerk BWN einstellen.

Die Erfindung wurde anhand einer Elektrolenkung für eine Hinterachse beschrieben, wobei vorzugsweise ein Synchronmotor zum Einsatz kommt. Die Erfindung ist aber nicht auf das konkrete Beispiel beschränkt, sondern kann auf alle elektrischen Lenkungs- und Motorkonzepte angewendet werden.

### Bezugszeichenliste

- RAS, RAS': Hinterachslenkung
- EM: Elektromotor
- LM: Lenkmechanik
- GT: Getriebe (der Lenkmechanik)
- LG: Lenkgestänge (der Lenkmechanik)
- HRD: Hinterräder
- WR: Stromversorgung (Wechselrichter)
- DV: Vorrichtung zur Dämpfung der Hinterachslenkung
- ECU: Steuerung (Electronic Control Unit der Schaltung)
- RL, RL': Schaltmittel (Relais der Schaltung)
- BWN: elektrisches Netzwerk
(Bremswiderstandnetzwerk der Schaltung)
- Ubatt: Batteriespannung

## Patentansprüche

1. Vorrichtung (DV) zur Dämpfung einer Hinterachslenkung (RAS), bei der ein Elektromotor (EM), auf eine Lenkmechanik (LM) für Hinterräder (HRD) einwirkt,
**dadurch gekennzeichnet,**
**dass** die Vorrichtung (DV) eine Schaltung (RL, BWN, ECU) aufweist, mittels der zur Herstellung eines sicheren Zustands der Hinterachslenkung (RAS), insbesondere zur bedämpften Freischaltung der Hinterachse, der Elektromotor (EM) in einen Generatorbetrieb versetzbar ist, so dass der Elektromotor (EM) ein die Lenkmechanik (LM) dämpfendes Bremsmoment erzeugt.

2. Vorrichtung (DV) nach Anspruch 1, **dadurch gekennzeichnet, dass** die Schaltung ein elektrisches Netzwerk (BWN), insbesondere ein Widerstandsnetzwerk, aufweist, und mindestens ein Schaltmittel (RL), insbesondere ein Relais, aufweist, das den Elektromotor (EM) von einer Versorgungsspannung trennt und mit dem elektrischen Netzwerk (BWN) verbindet, um den Elektromotor (EM) vom Motorbetrieb in den Bremsbetrieb umzuschalten.

3. Vorrichtung (DV) nach Anspruch 1, **dadurch gekennzeichnet, dass** die Schaltung mindestens ein Schaltmittel (RL), insbesondere einen Transistor oder ein Relais, aufweist, das den Elektromotor (EM) über einen Kurzschluss, insbesondere einen Kurzschluss der Zwischenkreisspannung eines den Elektromotor (EM) versorgenden Wechselrichters (WR), vom Motorbetrieb in den Bremsbetrieb umschaltet.

4. Vorrichtung (DV) nach Anspruch 1, 2 oder 3, **dadurch gekennzeichnet, dass** die Schaltung eine Steuerung (ECU) aufweist, die ein Umschalten des Elektromotors (EM) vom Bremsbetrieb in den Motorbetrieb und/oder umgekehrt steuert.

5. Vorrichtung (DV) nach einem der Ansprüche 2 bis 4, **dadurch gekennzeichnet, dass** das elektrische Netzwerk (BWN) in einem fehlerfreien Betrieb der Hinterachslenkung (RAS) inaktiv geschaltet ist.

6. Vorrichtung (DV) nach einem der vorhergehenden Ansprüche, **dadurch gekennzeichnet, dass** das von dem Elektromotor (EM) erzeugte Bremsmoment über das elektrische Netzwerk (BWN) einstellbar ist.

7. Vorrichtung (DV) nach einem der vorhergehenden Ansprüche, **dadurch gekennzeichnet, dass** das von dem Elektromotor (EM) erzeugte Bremsmoment darüber einstellbar ist, an welcher Stelle der Kurzschluss bzw. die Kurzschlüsse im Wechselrichter (WR) und/oder Elektromotor (EM) erzeugt wird bzw. werden.

8. Vorrichtung (DV) nach einem der Ansprüche 4 bis 7, **dadurch gekennzeichnet, dass** die Steuerung (ECU) ein Zusammenwirken des elektrisches Netzwerkes (BWN) mit dem Elektromotor (EM) in Abhängigkeit von einer Lenkgeschwindigkeit steuert.

9. Vorrichtung (DV) nach einem der vorhergehenden Ansprüche, **dadurch gekennzeichnet, dass** der Elektromotor (EM) ein permanent erregter Synchronmotor ist.

10. Vorrichtung (DV) nach einem der vorhergehenden Ansprüche **dadurch gekennzeichnet, dass** der Elektromotor (EM) parallel zu einer hydraulischen Vorrichtung auf die Lenkmechanik (LM) für die Hinterräder (HRD) einwirkt.

11. Vorrichtung (DV) nach einem der vorhergehenden Ansprüche, **dadurch gekennzeichnet, dass** der der Elektromotor (EM) parallel zu einer hydraulischen Vorrichtung auf die Lenkmechanik (LM) für die Hinterräder (HRD) einwirkt.

12. Hinterachslenkung (RAS) mit einer Vorrichtung (DV) zur Dämpfung der Hinterachslenkung (RAS), bei der ein Elektromotor (EM) auf eine Lenkmechanik (LM) für Hinterräder (HRD) einwirkt,
**dadurch gekennzeichnet,**
**dass** die Vorrichtung (DV) eine Schaltung (RL, BWN, ECU) aufweist, mittels der zur Herstellung eines sicheren Zustands der Hinterachslenkung (RAS), insbesondere zur bedämpften Freischaltung der Hinterachse, der Elektromotor (EM) in einen Generatorbetrieb versetzbar ist, so dass der Elektromotor (EM) ein die Lenkmechanik (LM) dämpfendes Bremsmoment erzeugt.

13. Verfahren zur Dämpfung einer Hinterachslenkung (RAS), wobei mittels eines Elektromotors (EM) auf eine Lenkmechanik (LM) für Hinterräder (HRD) eingewirkt wird,
**dadurch gekennzeichnet,**
**dass** zur Herstellung eines sicheren Zustands der Hinterachslenkung (RAS), insbesondere zur bedämpften Freischaltung der Hinterachse der Elektromotor (EM) in einen Generatorbetrieb versetzt wird, so dass von dem Elektromotor (EM) ein die Lenkmechanik (LM) dämpfendes Bremsmoment erzeugt wird.
